# EUROPEAN PATENT APPLICATION

(11) **EP 1 990 742 A1**
(43) Date of publication of application: **12.11.2008**
(21) Application number: 07024619.4
(22) Date of filing: 19.12.2007
(51) Int. Cl.: G06F 17/30

(54) **Mobile communication device and method for managing bookmark thumbnail images**

(30) Priority: 09.05.2007 KR 20070045068
(71) Applicant: LG Electronics Inc., Yongdungpo-gu Seoul 150-010 (KR)
(72) Inventor: Park, Jung Young, Seoul 153-023 (KR)
(74) Representative: Katérle, Axel

(57) **Abstract**

Provided are a mobile communication device and a method of controlling the same in which an image of a web page is stored as a thumbnail image when the web page is registered in a list of favorites so that a plurality of thumbnail images respectively corresponding to a plurality of web pages registered in the list of favorites can be displayed when the list of favorites is called. Therefore, it is possible for a user to easily recognize web page information regarding the registered web page from the thumbnail image without the need to additionally set a name of the registered web page.

## Description

This application claims priority from Korean Patent Application No. 10-2007-0045068 filed on May 9, 2007 in the Korean Intellectual Property Office, the disclosure of which is incorporated herein by reference in its entirety.

### BACKGROUND OF THE INVENTION

### 1. Field of the Invention

The present invention relates to a mobile communication device and a method of controlling the same in which a plurality of thumbnail images respectively corresponding to a plurality of web pages registered in a list of favorites are displayed when the list of favorites is called.

### 2. Description of the Related Art

In general, mobile communication devices store information regarding web pages that have been accessed and can thus easily access any of the web pages later again using the stored information. Information regarding web pages may be included in a list of favorites. Examples of information regarding web pages include the uniform resource locator (URL) addresses of the web pages and the names of the web pages. If information regarding web pages is called, the URL addresses and the names of the web pages may be displayed so that a user can easily access any of the web pages.

However, in the case of registering web pages in a list of favorites using the URL addresses or the names of the web pages, the URL addresses or the names of the web pages may not be displayed on a screen as a whole especially when they are too long. In order to address this, a scroll bar may be provided so that the URL addresses or the names of web pages registered in a list of favorites can be scrolled to the left or to the right. Alternatively, web pages may be registered in a list of favorites with user-given names, other than their real names. In this case, however, it may be difficult to readily detect a web page of interest from the web pages and access the web page of interest.

### SUMMARY OF THE INVENTION

The present invention provides a mobile communication device and a method of controlling the same in which a plurality of thumbnail images respectively corresponding to a plurality of web pages registered in a list of favorites are displayed when the list of favorites is called.

According to an aspect of the present invention, there is provided a method of controlling a mobile communication device, the method including registering a web page that has been accessed in a list of favorites; storing an image of the web page that has been accessed as a thumbnail image; and displaying a plurality of thumbnail images respectively corresponding to a plurality of web pages registered in the list of favorites when the list of favorites is called.

According to another aspect of the present invention, there is provided a mobile communication device including a wireless communication unit which provides an interface for web access; a display unit which displays a web page accessed by the wireless communication unit; and a control unit which controls an image of the accessed web page to be stored as a thumbnail image when the accessed web page is registered in a list of favorites, and controls a plurality of thumbnail images respectively corresponding to a plurality of web pages registered in the list of favorites to be displayed when the list of favorites is called.

### BRIEF DESCRIPTION OF THE DRAWINGS

The above and other features and advantages of the present invention will become more apparent by describing in detail preferred embodiments thereof with reference to the attached drawings in which:
FIG. 1 illustrates a block diagram of a mobile communication device according to an embodiment of the present invention;
FIG. 2 illustrates a flowchart of a method of controlling a mobile communication device according to an embodiment of the present invention;
FIGS. 3 and 4 illustrate flowcharts of the update of a registered thumbnail image as performed in the method illustrated in FIG. 2;
FIGS. 5 through 9 illustrate screen images for explaining the method illustrated in FIG. 2; and
FIGS. 10 through 12 illustrate screen images for explaining the update of a registered thumbnail image as performed in the method illustrated in FIG. 2.

### DETAILED DESCRIPTION OF THE INVENTION

The present invention will hereinafter be described in detail with reference to the accompanying drawings in which exemplary embodiments of the invention are shown.

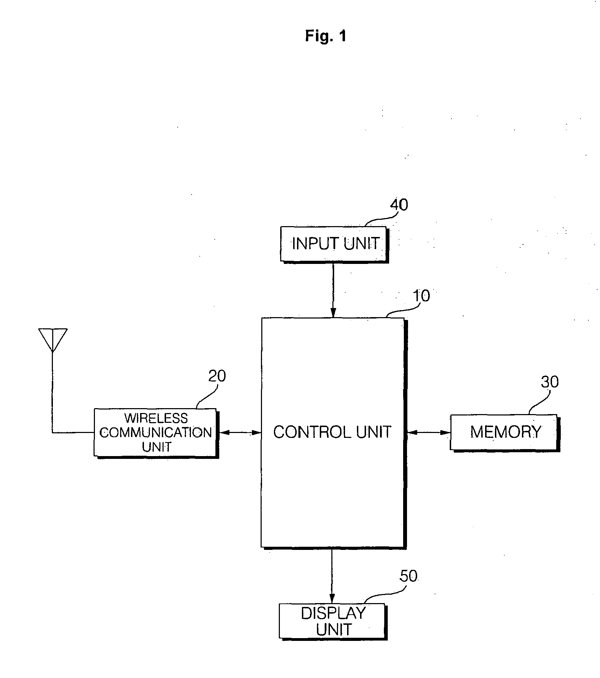

FIG. 1 illustrates a block diagram of a mobile communication device according to an embodiment of the present invention. Referring to FIG. 1, the mobile communication device includes an input unit 40 to which a user command is applied through key manipulation, a display unit 50 which displays data, a memory 30 which stores data, a wireless communication unit 20 which transmits/receives data, and a control unit 10 which controls the operations of the input unit 40, the display unit 50 and the wireless communication unit 20.

The input unit 40 includes a plurality of key buttons and applies a control signal corresponding to whichever of the key buttons is manipulated to the control unit 10. The key buttons of the input unit 40 may include not only a keypad which is included in the main body of the mobile communication device but also side keys which are provided on lateral sides of the main body of the mobile communication device. The display unit 50 may include a liquid crystal display (LCD) screen. The display unit 50 displays data regarding the operating state of the mobile communication device.

The wireless communication unit 20 provides an interface for communication with a base station through an antenna. The wireless communication unit 20 also provides an interface for web access. The memory 30 stores data of the mobile communication device and settings data regarding the operation of the mobile communication device. The memory 30 stores a list of favorites, including web page information provided by a website accessed by the mobile communication device through the wireless communication unit 20, and images of web pages registered in the list of favorites and provides the data stored therein upon the request of the control unit 10. More specifically, the memory 30 may store the images of the web pages registered in the list of favorites as thumbnail images.

The control unit 10 controls the operation of the mobile communication device by controlling the operations of the input unit 40, the display unit 50 and the wireless communication unit 20. More specifically, when the mobile communication device accesses the Internet through the wireless communication unit 20, the control unit 10 may control a web page accessed by the mobile communication unit to be displayed by the display unit 50. In this case, if a command to register the accessed web page in a list of favorites is applied to the mobile communication device through the wireless communication unit 20, the control unit 10 may store an image of the accessed web page in the memory 30 as a thumbnail image along with web page information regarding the accessed web page such as a uniform resource locator (URL) address of the accessed web page. In addition, when a list of favorites is called, the control unit 10 controls a plurality of thumbnail images respectively corresponding to a plurality of web pages registered in the list of favorites to be displayed on a screen of the display unit 50.

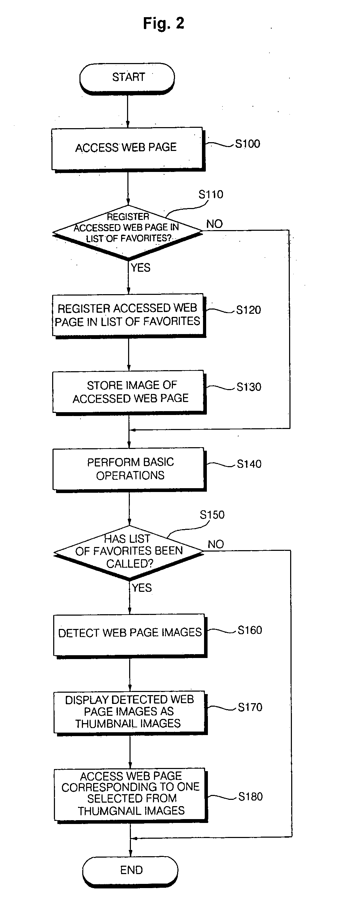

FIG. 2 illustrates a flowchart of a method of controlling a mobile communication terminal according to an embodiment of the present invention. Referring to FIG. 2, the control unit 10 controls a web page to be accessed in response to a command input by a user and also controls the accessed web page to be displayed on the screen of the display unit 50 (S100). If the user wishes to register the accessed web page in a list of favorites (S 110), the control unit 10 registers information regarding the accessed web page in the list of favorites (S120). Then, the control unit 10 controls an image of the accessed web page to be stored as a thumbnail image (S130).

Thereafter, the control unit 10 performs its basic operations in response to a user command input by the user (S140). If a command to call the list of favorites is applied (S150), the control unit 10 detects a plurality of thumbnail images respectively corresponding to a plurality of web pages registered in the list of favorites (S160), and controls the list of favorites to be displayed as the detected thumbnail images (S170). If one of the displayed thumbnail images is selected, the control unit 10 controls a web page corresponding to the selected thumbnail image to be accessed, and also controls an image of the web page corresponding to the selected thumbnail image to be displayed on the screen of the display unit 50.

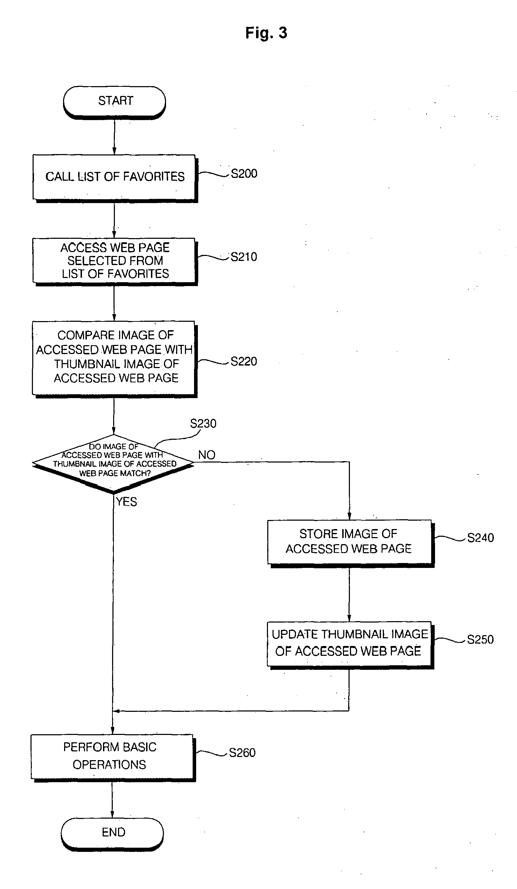

FIG. 3 illustrates a flowchart of the update of a thumbnail image registered upon accessing a web page, as performed in the method illustrated FIG. 2. Referring to FIG. 3, if a command to call at least one web page registered in a list of favorites is applied (S200), the control unit 10 calls the list of favorites and controls the list of favorites to be displayed by the display unit 50. More specifically, the control unit 10 may control a plurality of thumbnail images respectively corresponding to a plurality of web pages registered in the list of favorites to be displayed by the display unit 50.

If one of the displayed thumbnail images is selected, the control unit 10 detects web page information corresponding to the selected thumbnail image, controls a web page corresponding to the web page information to be accessed, and also controls the web page information to be displayed by the display unit 50 (S210). The control unit 10 compares an image of the accessed web page with the selected thumbnail image (S220). If the image of the accessed web page is the same as the selected thumbnail image (S230), the control unit 10 performs its basic operations in response to a control command input by the user (S260). On the other hand, if the image of the accessed web page is not the same as the selected thumbnail image (S230), the control unit 10 stores the image of the accessed web page as a new thumbnail image of the accessed web page (S240) so that the existing thumbnail image of the accessed web page can be updated with the image of the accessed web page (S250).

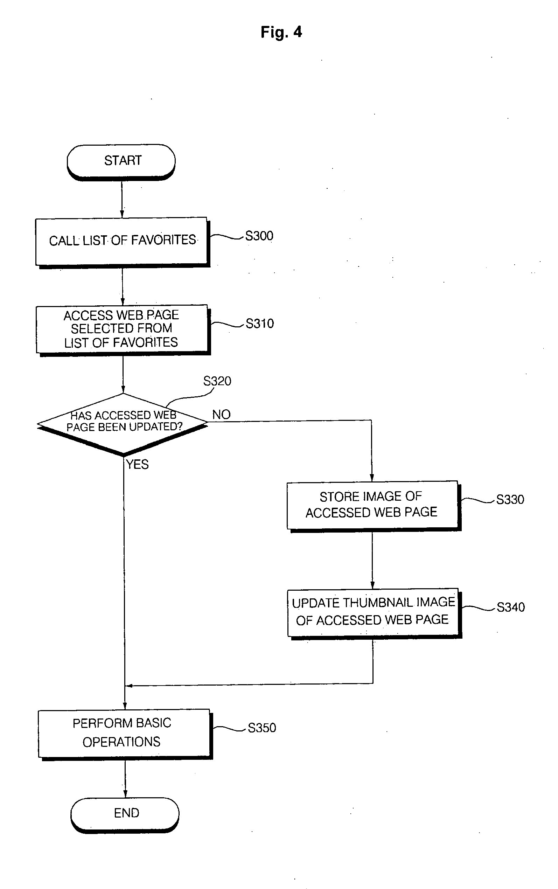

FIG. 4 illustrates the update of a registered thumbnail image in response to a user command as performed in the method illustrated in FIG. 2. Referring to FIG. 4, if a command to call at least one web page registered in a list of favorites is applied (S300), the control unit 10 calls the list of favorites and controls the list of favorites to be displayed by the display unit 50. More specifically, the control unit 10 may control a plurality of thumbnail images respectively corresponding to a plurality of web pages registered in the list of favorites to be displayed by the display unit 50.

If one of the displayed thumbnail images is selected, the control unit 10 detects web page information corresponding to the selected thumbnail image, controls a web page corresponding to the web page information to be accessed and also controls the web page information to be displayed by the display unit 50 (S310). Thereafter, the control unit 10 performs its basic operations in response to a control command (S350). If the accessed web page is updated in response to a command input by a user (S320), the control unit 10 automatically stores an image of the updated web page as a new thumbnail image of the updated web page (S330) so that an existing thumbnail image of the updated web page can be updated with the image of the updated web page (S340).

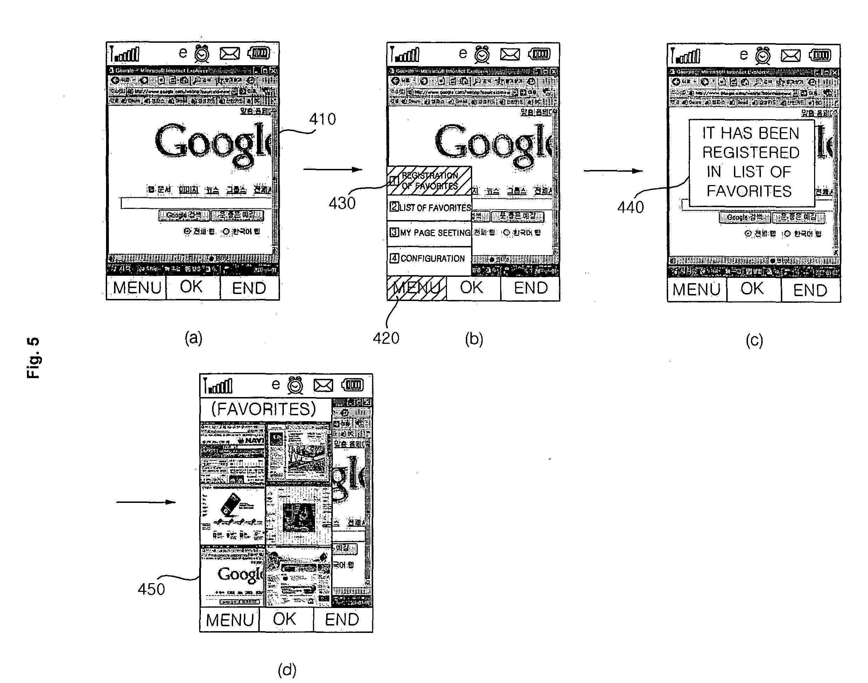

FIGS. 5 through 9 illustrate screen images for explaining the method illustrated in FIG. 2. More specifically, FIG. 5 illustrates screen images for explaining the registration of an accessed web page with a list of favorites. Referring to FIG. 5(a), when a website is accessed, the control unit 10 controls a web page 410 of the website to be displayed on the screen of the display unit 50. Referring to FIGS. 5(b) and 5(c), if a first menu item 'REGISTER WITH LIST OF FAVORITES' is selected through the manipulation of a button 'MENU' 420, the web page 410 is registered in a list of favorites and a message 440 indicating the registration of the web page 410 in the list of favorites is displayed on the screen of the display unit 50 according to predefined settings. Referring to FIG. 5(d), the control unit 10 may also register an image of the web page 410 in the list of favorites as a thumbnail image 450 so that the thumbnail image 450 can be displayed when the list of favorites is called.

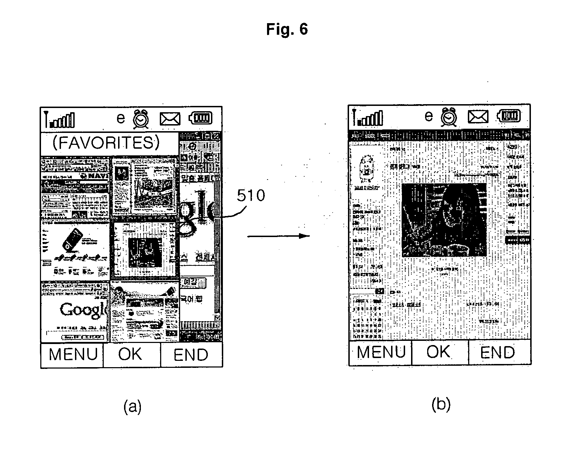

FIG. 6 illustrates screen images for explaining the access of a web page through a thumbnail image included in a list of favorites. Referring to FIG. 6(a), when a list of favorites is called, the control unit 10 detects a plurality of thumbnail images respectively corresponding to a plurality of web pages registered in the list of favorites and displays the detected thumbnail images on the screen of the display unit 50. Referring to FIG. 6(b), if one of the displayed thumbnail images, for example, a thumbnail image 510, is selected, the control unit 10 controls a web page corresponding to the thumbnail image 510 to be accessed.

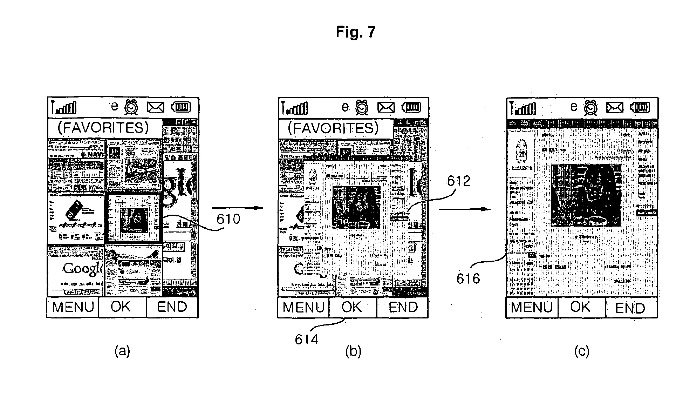

FIGS. 7 through 9 illustrate screen images for explaining the display of a thumbnail image registered in a list of favorites. Referring to FIG. 7(a), when a list of favorites is called, the control unit 10 detects a plurality of thumbnail images respectively corresponding to a plurality of web pages registered in the list of favorites and displays the detected thumbnail images on the screen of the display unit 50. Referring to FIG. 7(b), if one of the displayed thumbnail images, i.e., a thumbnail image 610, is selected upon the movement of a pointing cursor, the control unit 10 displays an enlarged view 612 of the thumbnail image 610 on the screen of the display unit 50 so that a user can easily identify web page information corresponding to the thumbnail image 610. Referring to FIG. 7(c), if a button 'OK' 614 is selected, the control unit 10 controls a web page 616 corresponding to the thumbnail image 610 to be accessed.

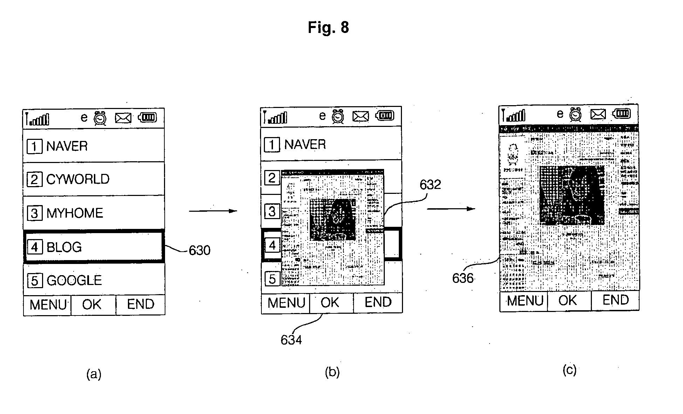

In the embodiment of FIG. 8, unlike in the embodiment of FIG. 7, a list of favorites is displayed as a list of a plurality of pieces of web page information, instead of being displayed as a list of thumbnail images. Referring to FIGS. 8(a) and 8(b), If a fourth menu item 'BLOG' 630 is selected upon the movement of a pointing cursor through key manipulation, the control unit 10 displays an enlarged view 632 of a web page 636 corresponding to the fourth menu item 'BLOG' 630 on the screen of the display unit 50. Thereafter, referring to FIG. 8(c), if a button 'OK' 634 is selected, the control unit 10 controls the web page 626 to be accessed.

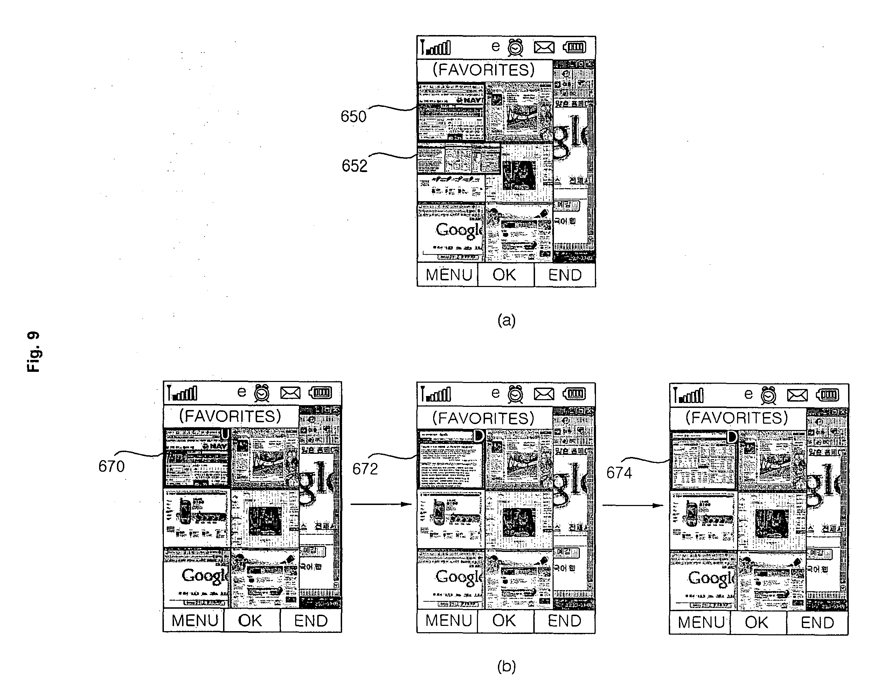

In the embodiment of FIG. 9, the control unit 10 registers a web page in a list of favorites along with lower page information regarding a lower page of the web page and an image of the lower page. Thus, when one of a plurality of thumbnail images included in the list of favorites is selected, the selected thumbnail image is displayed along with the images of one or more lower page of a web page corresponding to the selected thumbnail image as a slideshow. A lower page of a web page may include at least one of a web page registered through user settings, a web page that has been accessed at least once, and a web page that has been accessed more than a predefined number of times.

More specifically, referring to FIG. 9(a), the control unit 10 displays a selected thumbnail image in an area 650 and displays one or more previously-registered lower pages of a web page corresponding to the selected thumbnail image in an area. Referring to FIG. 9(b), the control unit 10 may sequentially display images 672 and 674 of the previously-registered lower pages of the web page corresponding to the selected thumbnail image in an area 670 as a slideshow. In order to differentiate the selected thumbnail image from the previously-registered lower page images 672 and 674, an identifier such as text, an icon or an emoticon may be displayed in the selected thumbnail image from the previously-registered lower page images 672 and 674, respectively. For example, referring to FIG. 9(b), the letter 'U' may be displayed in the selected thumbnail image as an abbreviation of the word 'up', and the letter 'D' may be displayed in the previously-registered lower page images 672 and 674, respectively, as an abbreviation of the word 'down'.

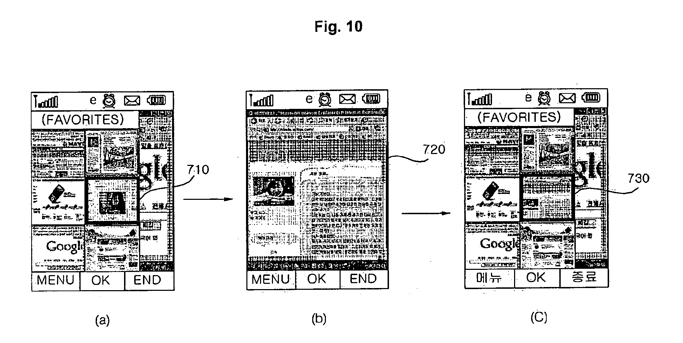

FIGS. 10 through 12 illustrate screen images for explaining the update of a registered thumbnail image as performed in the method illustrated in FIG. 2. Referring to FIG. 10(a), when a list of favorites is called, the control unit 10 detects a plurality of thumbnail images respectively corresponding to a plurality of web pages registered in the list of favorites and displays the detected thumbnail images on the screen of the display unit 50. Referring to FIG. 10(b), if one of the displayed thumbnail images, for example, a thumbnail image 710, is selected, the control unit 10 detects web page information corresponding to the thumbnail image 710 and thus controls a web page 720 corresponding to the thumbnail image 710 to be accessed. In this case, the control unit 10 may compare an image of the web page 720 with the thumbnail image 710. If the image of the web page 720 is different from the thumbnail image 710, the control unit 10 stores the image of the web page 720 in the memory 30 so that the thumbnail image 710 can be updated with the image of the web page 820. As a result, referring to FIG. 7(c), the image of the web page 720 is displayed as a thumbnail image 730.

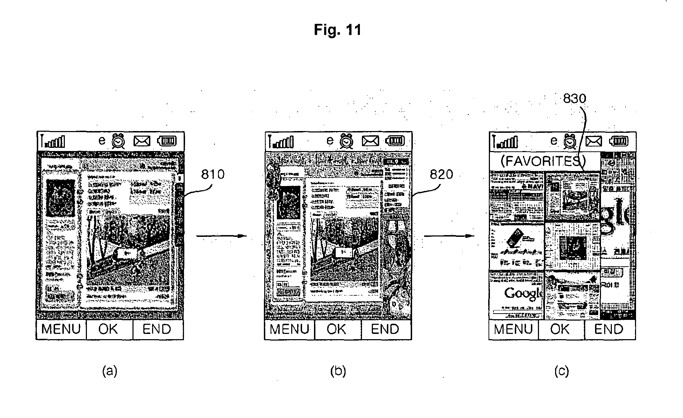

Referring to FIG. 11(a), the control unit 10 controls a web page 810 corresponding to one selected from a plurality of thumbnail images included in a list of favorites to be accessed and also controls the web page 810 to be displayed on the screen of the display unit 50. Referring to FIG. 11(b), if the web page 810 is updated in response to a control command input by a user, the control unit 10 automatically stores an updated web page 820 so that a thumbnail image registered in the list of favorites corresponding to the web page 810 can be updated with an image of the updated web page 820. As a result, referring to FIG. 11(c), the image of the updated web page 820 is displayed as a thumbnail image 830 when the list of favorites is called.

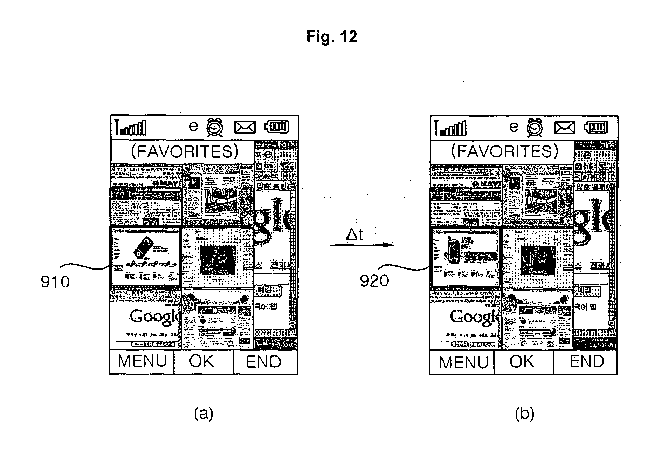

In the embodiment of FIG. 12, unlike in the embodiments of FIGS. 10 and 11, a predetermined amount of time after the registration of a web page in a list of favorites, it is determined whether the registered web page has been updated. If the registered web page is determined to have been updated, a thumbnail image 910 of the registered web page is automatically updated so that a thumbnail image 920, instead of the thumbnail image 910, can be displayed on the screen of the display unit 50.

As described above, according to the present invention, an image of a web page registered in a list of favorites is displayed as a thumbnail image when the list of favorites is called. Thus, it is possible for a user to easily recognize web page information regarding the registered web page from the thumbnail image without the need to additionally set a name of the registered web page.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of controlling a mobile communication device, the method comprising:
registering a web page that has been accessed in a list of favorites;
storing an image of the web page that has been accessed as a thumbnail image; and
displaying a plurality of thumbnail images respectively corresponding to a plurality of web pages registered in the list of favorites when the list of favorites is called.

2. The method of claim 1, further comprising accessing a web page corresponding to one selected from the displayed thumbnail images.

3. The method of claim 1, further comprising updating the displayed thumbnail images.

4. The method of claim 3, wherein the updating the displayed thumbnail images, comprises updating a thumbnail image of the web page that has been accessed with an image of the web page that has been accessed if the thumbnail image of the web page that has been accessed is different from the image of the web page that has been accessed.

5. The method of claim 3, wherein the updating the displayed thumbnail images, further comprises periodically updating the displayed thumbnail images.

6. The method of claim 3, wherein the updating the displayed thumbnail images, further comprises updating the displayed thumbnail images in response to a user command.

7. The method of claim 1, further comprising registering lower page information regarding one or more lower pages of the web page that has been accessed and images of the lower pages.

8. The method of claim 7, wherein the lower pages comprise at least one of a web page that has been registered through user settings, a web page that has been accessed more than one time, and a web page that has been accessed more than a predefined number of times.

9. The method of claim 7, further comprising, if one of the displayed thumbnail images is selected, displaying the selected thumbnail image and one or more lower pages of a web page corresponding to the selected thumbnail image as a slideshow.

10. The method of claim 9, wherein varying a duration of the slideshow of the selected thumbnail image and the lower pages of the web page corresponding to the selected thumbnail image.

11. The method of claim 9, wherein the displaying the selected thumbnail image and the lower pages of the web page corresponding to the selected thumbnail image as a slideshow, comprises displaying an identifier for identifying thumbnail images in the selected thumbnail image and an identifier for identifying lower pages in the lower pages of the web page corresponding to the selected thumbnail image, respectively.

12. The method of claim 1, further comprising, if one of the displayed thumbnail images is selected upon movement of a pointing cursor, displaying an enlarged view of the selected thumbnail image.

13. A mobile communication device comprising:
a wireless communication unit which provides an interface for web access;
a display unit which displays a web page accessed by the wireless communication unit; and
a control unit which controls an image of the accessed web page to be stored as a thumbnail image when the accessed web page is registered in a list of favorites, and controls a plurality of thumbnail images respectively corresponding to a plurality of web pages registered in the list of favorites to be displayed when the list of favorites is called.

14. The mobile communication device of claim 13, further comprising a memory which stores the list of favorites and the thumbnail images respectively corresponding to the web pages registered in the list of favorites.

15. The mobile communication device of claim 13, wherein, if one of the thumbnail images respectively corresponding to the web pages registered in the list of favorites is selected, the control unit controls a web page corresponding to the selected thumbnail image to be accessed.

16. The mobile communication device of claim 13, wherein the control unit controls lower page information regarding one or more lower pages of the accessed web page to be registered in the list of favorites along with the image of the accessed web page.

17. The mobile communication device of claim 16, wherein, if one of the thumbnail images respectively corresponding to the web pages registered in the list of favorites is selected, the control unit controls the selected thumbnail image and one or more lower pages of a web page corresponding to the selected thumbnail image to be displayed as a slideshow.

18. The mobile communication device of claim 17, wherein the control unit controls an identifier for identifying thumbnail images to be displayed in the selected thumbnail image and also controls an identifier for identifying lower pages to be displayed in the lower pages of the web page corresponding to the selected thumbnail image, respectively.

19. The mobile communication device of claim 13, wherein, if one of the thumbnail images respectively corresponding to the web pages registered in the list of favorites is selected upon movement of a pointing cursor, the control unit controls an enlarged view of the selected thumbnail image to be displayed on a screen.

20. The mobile communication device of claim 13, wherein the control unit controls the thumbnail images respectively corresponding to the web pages registered in the list of favorites to be updated according to user settings.
